# EUROPÄISCHE PATENTANMELDUNG

(11) **EP 1 849 698 A1**
(43) Veröffentlichungstag der Anmeldung: **31.10.2007**
(21) Anmeldenummer: 06008506.5
(22) Anmeldetag: 25.04.2006
(51) Int. Cl.: B62M 1/10

(54) **Energiespeicherrad**

(71) Anmelder: Van Toller, Julian, 85598 Baldham-Vaterstetten (DE)
(72) Erfinder: Van Toller, Julian, 85598 Baldham-Vaterstetten (DE)
(74) Vertreter: von Hellfeld, Axel

(57) **Zusammenfassung**

Eine Vorrichtung, die in einem Rad zwischen einer Radachse (10) und einer Radfelge (78) angeordnet ist und mit der Bewegungsenergie gespeichert werden kann oder gespeicherte Energie, die als Translationsenergie zur Fortbewegung genutzt werden kann, zu jedem beliebigen Zeitpunkt abgegeben werden kann.

## Beschreibung

Die Erfindung betrifft eine Vorrichtung zum Speichern von Bremsenergie und zum Abgeben derselben in einem Rad.

Fahrräder finden ihren Haupteinsatzbereich im alltäglichen Leben - zum Beispiel als Beförderungsmittel zur Arbeit. Besonders im Stadtverkehr ist das Radfahren energieaufwendig, da Ampelanlagen nicht nur die Autofahrer, sondern auch die Radfahrer zu unökonomischem Abbremsen und dann wieder zum Anfahren zwingen. Bei dem Vorgang des erneuten Anfahrens, muss der Radfahrer Energie aufbringen, die er zuvor durch das Abbremsen verloren hat, um sein Körpergewicht und das seines Fahrrades erneut auf eine bestimmte Geschwindigkeit zu beschleunigen. Auf hügeligen Strecken, nach einer Abfahrt, wäre es oft angenehm, wenn ein Teil der Energie, die sonst während eines Bremsvorgangs verloren geht, gespeichert und für eine neue Steigung genutzt werden könnte.

Der Stand der Technik kennt zum Beispiel ein Energiesparfahrrad nach der DE 4423342 A1, bei dem "Energie gehalten, gespeichert und nach dem Loslassen der Bremse wieder freigelassen werden kann", jedoch keine Vorrichtung, mit der wahlweise Energie gespeichert oder gespeicherte Energie freigegeben werden kann. Es sind dort auch keine Bremssysteme vorgesehen, die derart aufeinander abgestimmt sind, dass Energie sequentiell, wie zum Beispiel bei einem Yo-Yo-Effekt aufgenommen und abgegeben werden kann. Des Weiteren kennt der Stand der Technik auch keine energiespeichernde Vorrichtung, die unabhängig von einem Speichervorgang dazu genutzt werden kann, das Rad abzubremsen. Es ist im Stand der Technik auch nicht möglich, die gespeicherte Energie, zum Beispiel während eines Parkvorgangs des Rades, zu speichern, um diese bei einer neuen Anfahrt nutzen zu können. Es ist auch keine Vorrichtung bekannt, die dazu dient, ein Überspannen der Speicherelemente zu verhindern.

Ziel der Erfindung ist es, bei einem Rad, insbesondere einem Fahrrad, Energie, die durch Bremsen verloren ginge, zu speichern, um sie zu einem beliebigen späteren Zeitpunkt zur Beschleunigung nutzen zu können.

Hierzu stellt die Erfindung eine Vorrichtung zum Speichern und Abgeben von Bremsenergie eines Rades bereit, die dadurch gekennzeichnet ist, dass Speicherelemente radial zwischen einer Radachse und einer Radfelge angeordnet sind, wobei eine Seite der Speicherelemente mit der Felge und die andere mit jeweils einem, in einer starren Rahmenkonstruktion frei drehbar gelagerten Kegelrad verbunden ist, das innerhalb eines Rahmens um seine Achse, die senkrecht auf der Rotationsachse des Rades steht, rotiert und sich mit dem Rahmen um die Achse des Rahmens dreht, wobei gezahnte Seiten der Kegelräder mit Zähnen von um die Radachse frei drehbar gelagerten Tellerrädern kämmen.

Die Vorrichtung ist derart ausgestaltet, dass sie Energie beim Bremsen oder auch unter Einsatz von etwas mehr Kraftaufwand während des Tretens der Pedale speichern kann. Dies geschieht aufgrund von mechanischer Übersetzung durch das Drehen des Rades. Dabei wird die Energie bevorzugt in mehrfach um eine Achse rotierenden Speicherelementen, die aus dehnbarem, elastischen oder federndem Material bestehen, aufgenommen, welche durch Rotation gespannt werden, wie zum Beispiel einem oder mehreren Gummibändern. Bevorzugt können die Gummibänder aus Gummi oder anderen natürlichen oder synthetischen Elastomeren bestehen. Die Rotation kann auch über einen geeigneten Mechanismus, wie zum Beispiel eine Zahnstange oder eine andere Vorrichtung in eine Translation umgewandelt werden, die einen Federweg verkürzt oder verlängert und somit eine Feder, wie zum Beispiel eine Wendelfeder spannt. Dies kann zum Beispiel auch durch einen um seine Achse rotierenden Gewindestab und eine Mutter, verbunden mit einer Feder, zum Beispiel eine Wendelfeder, realisiert werden.

Vorzugsweise wird dabei das Speicherelement kontinuierlich angespannt, bis ein Maximum an Spannung (Energiespeicherung) erreicht ist. Gemäß einer bevorzugten Ausgestaltung ist die Erfindung mit einer Sicherheitsvorrichtung, wie zum Beispiel einer einstellbaren Sicherheitskupplung oder Momentkupplung ausgestattet, um ein Überspannen der Speicherelemente, wie zum Beispiel der Gummibänder, zu verhindern.
Die in den Speicherelementen aufgenommene Energie kann bevorzugt so lange gespeichert werden, wie es der Fahrer wünscht und jederzeit genutzt werden, um das Rad in Fahrtrichtung zu beschleunigen. Erfindungsgemäß ist es auch möglich, dass die Energie genutzt werden kann, um das Rad rückwärts zu beschleunigen.

Bevorzugt wird die Energie über ein oder mehrere Bremssysteme mit zum Beispiel mechanischen oder magnetischen Kupplungsvorrichtungen mit Seitenbremsen und Speicherbremsen gespeichert und abgegeben. Gemäß einer bevorzugten Ausgestaltung wird durch Lösen von Speicherbremsen, mit denen die Speicherelemente verbunden sind, die Spannung in den Gummibändern freigesetzt und somit die darin gespeicherte Energie zur Antriebsunterstützung des Fahrrades genutzt. Befindet sich das Speicherelement im lastfreien Zustand, so kann es in diesem belassen oder zum Beispiel während eines Bremsvorgangs erneut angespannt werden, um auf diese Weise erneut Energie aufzunehmen. Bevorzugt kann sich der Radfahrer fortbewegen, ohne die energiespeichernde Vorrichtung zu nutzen, d.h. ohne diese zu laden oder die darin gespeicherte Energie freizusetzen.

Gemäß einer bevorzugten Ausgestaltung der Erfindung kann die Vorrichtung zum Speichern und Abgeben von Bremsenergie an jeder beliebigen Radachse, wie zum Beispiel an der Vor- oder Hinterachse eines Rades montiert werden. Des Weiteren können die Abmessungen der Vorrichtung derart bemessen sein, dass jedes Standardfahrrad oder jedes Rad eines Fahrzeugs mit dieser Erfindung ausgestattet werden kann.
Bevorzugt rotiert die Vorrichtung um die Rotationsachse eines Rades. Auf der Rotationsachse ist eine Hauptwelle über Kugellager frei drehbar gelagert. An einem Ende der Hauptwelle befindet sich ein Zahnkranzsatz, mit dem das Rad unter Verwendung einer herkömmlichen Fahrradantriebsvorrichtung angetrieben werden kann. Gemäß einer bevorzugten Ausgestaltung ist ein Hauptrahmen in etwa mittig auf der Hauptwelle positioniert, der mit dieser starr verbunden ist. Gemäß einer bevorzugten Ausgestaltung sind auf der Hauptwelle Tellerräder frei drehbar gelagert. Dabei befindet sich bevorzugt ein Tellerrad zwischen dem Zahnkranzsatz und dem Hauptrahmen und ein anderes bevorzugt zu diesem identisches Tellerrad spiegelsymmetrisch auf der anderen Seite des Hauptrahmens. Die auf der Hauptwelle angeordneten Teile werden bevorzugt an einem Ende der Hauptwelle durch ein Endstück und an dem anderen Ende der Hauptwelle über, zum Beispiel eine Mutter und ein Gewinde gehalten, so dass diese nicht von der Hauptwelle abrutschen können. Gemäß einer bevorzugten Ausgestaltung ist jedes Tellerrad mit einem Bremssystem, zum Beispiel einer hydraulischen Bremse verbunden.

Gemäß einer bevorzugten Ausgestaltung werden die Enden des Hauptrahmens der, wie beschrieben an der Hauptwelle befestigt ist, mit Lagerblöcken starr verbunden. Bevorzugt wird auf jedem Lagerblock ein U-förmiger Rahmen befestigt, der wiederum mit der Fahrradfelge, zum Beispiel über ein Verbindungsstück, starr verbunden ist. Die Verbindung zwischen einer Hauptwelle, einem Hauptrahmen, den Lagerblöcken, den U-förmigen Rahmenstücken, die die Speichen repräsentieren, mit der Felge, bildet ein "starres Felgenkorsett". Gemäß einer bevorzugten Ausgestaltung können die genannten Rahmenteile aus einem integralen Rahmenstück bestehen. Bevorzugt können die Hauptwelle, der Hauptrahmen, die Lagerblöcke, die U-förmigen Rahmenstücke und die Felge aus einem integralen Rahmenstück bestehen. Gemäß einer bevorzugten Ausgestaltung können die Rahmenteile, zum Beispiel aus Stahl, aus Aluminium, aus Teflon oder Kunststoff in Faserverbundbauweise (Kohlefasern, Carbon, Epoxidharz) bestehen.

In den Lagerblöcken des Felgenkorsetts sind Kegelräder über Kugellager frei drehbar gelagert, deren Zähne vorzugsweise unter einem Winkel von jeweils 45° mit den Zähnen der Tellerräder kämmen. Dabei steht die Rotationsachse der Kegelräder bevorzugt senkrecht auf der Rotationsachse der Tellerräder. Gemäß einer bevorzugten Ausgestaltung, kann die starre Rahmenkonstruktion im Bereich der Kegelräder mit zusätzlichen Stabilisatoren ausgestattet sein. An den Kegelrädern, die in den Lagerblöcken frei drehbar gelagert sind, sind bevorzugt auf der Seite, die der Fahrradfelge zugewandt ist, Speicherelemente, wie zum Beispiel Gummibänder an dafür vorgesehenen Befestigungen angebracht. Das andere Ende der Gummibänder wird bevorzugt innerhalb der starren Rahmenkonstruktion an den radial außenseitigen Enden des U-förmigen Rahmens, der mit der Felge starr verbunden ist, befestigt. Die U-förmigen Rahmen stellen die Speichen eines Rades dar, in denen das Speichersystem angeordnet ist. Gemäß einer bevorzugten Ausgestaltung befinden sich an den Kegelrädern, an denen die Gummibänder befestigt sind, Bremsvorrichtungen, die eine Rotation der Kegelräder stoppen oder starten können.

Werden die Speicherbremsen aktiviert, so wird die Rotation der Kegelräder gestoppt und die Gummibänder oder Feder können sich nicht weiter aufwickeln oder spannen und die bis dahin aufgeladene Energie wird in diesen konserviert. Werden die Speicherbremsen deaktiviert, so wird die, in den Gummibändern oder Federn gespeicherte Energie freigesetzt, indem die Kegelräder rotieren. Bevorzugt können die Speicherbremsen entweder aus einer magnetischen oder aus einer mechanischen Vorrichtung bestehen.

Bevorzugt kann die Erfindung mit einer mechanisch oder magnetisch steuerbaren Sicherheitskupplung ausgestattet sein, die sich bevorzugt an der Innenseite der radial außen liegenden Wand eines U-förmigen Rahmens, der mit der Felge verbunden ist, befindet, so dass die Gummibänder über die Sicherheitskupplung an dem Rahmen befestigt ist. Die Sicherheitskupplung dient dazu, dass die Gummibänder eine sicherheitsbedingte vorgegebene Spannungsgrenze nicht überschreiten können und somit ein Überspannen der Gummibänder verhindert wird. Bei Erreichen der Spannungsgrenze wird die Sicherheitskupplung automatisch aktiviert, so dass die Aufladevorrichtung ausgekuppelt wird und keine weitere Aufladung mehr stattfinden kann. Die Sicherheitskupplung kann gemäß einer bevorzugten Ausgestaltung aus einer äußeren Kupplungsplatte, einer inneren Kupplungsplatte, einer Feder oder einer magnetischen Vorrichtung bestehen. Dabei ist ein Ende der Gummibänder oder Feder an der inneren Kupplungsplatte befestigt. Bevorzugt ist dabei die Spannungsgrenze durch eine Feder oder eine magnetische Vorrichtung und eine Mutter einstellbar.

Dreht sich das Rad unter Verwendung des Zahnkranzsatzes, so können die, aus in Fahrtrichtung hinten betrachtet linksseitige und rechtsseitige Bremse, die mit den jeweiligen Tellerrädern verbunden sind, welche links und rechts neben dem Hauptrahmen auf der Hauptwelle frei drehbar gelagert sind, vom Fahrer einzeln oder beide gleichzeitig ausgewählt und betätigt werden. Werden beide Bremsen gleichzeitig betätigt, so wird der Hauptrahmen festgehalten und das Rad bleibt stehen.

Wird zum Beispiel die rechtsseitige Bremse betätigt, so dreht sich die Vorrichtung weiter um die Rotationsachse. Dabei bleibt das rechte Tellerrad stehen und die Kegelräder, deren Rotationsachsen senkrecht auf der Rotationsachse des Tellerrades stehen, rotieren um ihre Achse und drehen sich dabei mit dem Hauptrahmen um die Rotationsachse und das linke Tellerrad rotiert ungehindert weiter. Durch die Rotation der Kegelräder, deren Rotationsachsen senkrecht auf der Rotationsachse des Rades stehen, werden die Gummibänder, die an diesen befestigt sind, um ihre eigene Achse gedreht, sodass sie aufgewickelt (bzw. verdrillt) und immer stärker angespannt werden. Befinden sich die Gummibänder nun in einem angespannten Zustand, so kann die rechtsseitige Bremse losgelassen werden, und die Speicherbremsen, die verhindern, dass die Kegelräder weiter rotieren, werden aktiviert. In diesem Fall wird die Energie, die in den Gummibändern aufgenommen wurde, gespeichert. Wahlweise kann diese Energie freigesetzt werden, indem die linksseitige Bremse betätigt und die Speicherbremsen deaktiviert werden. Der gleiche Zustand kann auch durch die Betätigung der linksseitigen Bremse, ohne vorherige Betätigung der Speicherbremsen, herbeigeführt werden.

Gemäß einer bevorzugten Ausgestaltung der Erfindung können die Bremssysteme (links- und rechtsseitige Bremse und Speicherbremsen) derart aufeinander abgestimmt werden, dass die Speichervorrichtung sequentiell, ähnlich wie bei einem Yo-Yo-Effekt Energie aufnehmen und abgeben kann. Dabei wird die rechtsseitige Bremse aktiviert, so dass die Kegelräder (wie beschrieben) um ihre eigene Achse rotieren, und die Gummibänder spannen. Anschließend wir die gespeicherte Energie wieder abgegeben, indem die linksseitige Bremse betätigt und die rechtsseitige deaktiviert wird. Die Kegelräder rotieren um eine der Aufladerichtung entgegengesetzte Richtung. Die linksseitige Bremse bleibt aktiviert und die Gummibänder laden sich durch das Prinzip der Trägheit nach der Entladung wieder auf, indem das Kegelrad weiter in die gleiche Richtung rotiert, wie bei dem Vorgang des Entladens. Nachdem die Gummibänder aufgeladen wurden, wird die linksseitige Bremse wieder deaktiviert und die rechtsseitige wieder aktiviert, um die gespeicherte Energie wieder abzugeben. Ähnlich wie bei einem Yo-Yo-Effekt muss dem System nur wenig Energie vom Fahrer zugefügt werden, um eine bestimmte Geschwindigkeit zu halten. Bevorzugt kann ein zyklisches Betätigen der linksseitigen und der rechtsseitigen Bremse durch den Fahrer, oder von einer Elektronik übernommen werden. Gemäß einer bevorzugten Ausgestaltung der Erfindung, kann sich zwischen den Kegelrädern und den Speicherelementen eine Kupplung befinden, die bewirkt, dass die Speicherelemente unabhängig voneinander aufgeladen und entladen werden können.

Der Vorgang der Energiespeicherung kann von jeder beliebigen Ausgangsgeschwindigkeit ausgeführt werden. Desgleichen kann die gespeicherte Energie von unterschiedlichen Ausgangsgeschwindigkeiten, auch aus dem Stand, zur Beschleunigung genutzt werden. Sind die Gummibänder aufgeladen und die Speicherbremsen aktiviert, so kann das Fahrrad mit einer Standardbremsvorrichtung oder durch gleichzeitige Betätigung des links- und rechtsseitigen Bremssystems der Tellerräder angehalten werden, ohne dass die Energie aus der Speichervorrichtung verloren geht. Die energiespeichernde und energieabgebende Vorrichtung kann auch während einer Fahrt ungenutzt bleiben.

Wenn hier in Bezug auf das Fahrrad von vorne, hinten, oben, unten, vertikal, und horizontal die Rede ist, dann beziehen sich diese Aussagen auf den normalen Betriebszustand des Fahrrades in aufrechter Stellung und in Bezug auf seine übliche Fahrtrichtung.

Die Erfindung wird im Folgenden anhand des in der Zeichnung schematisch dargestellten Ausführungsbeispiels näher erläutert. Dabei wird das Ausführungsbeispiel mit Hilfe von zwei Speichervorrichtungen beschrieben. Es können jedoch mehrere Speichervorrichtungen in einem Rad positioniert werden.
Figur 1 zeigt einen Querschnitt durch eine Vorrichtung zum Speichern und Abgeben von Bremsenergie eines Rades.
Figur 2 zeigt eine Seitenansicht einer Vorrichtung zum Speichern und Abgeben von Bremsenergie eines Rades.
Figur 3 zeigt eine dreidimensionale Ansicht einer Rahmenkonstruktion einer Vorrichtung zum Speichern und Abgeben von Bremsenergie eines Rades.
Figur 4 zeigt einen Längsschnitt und zwei Seitenansichten einer Hauptwelle.
Figur 5 zeigt eine dreidimensionale Ansicht einer Hauptwelle.
Figur 6 zeigt eine Seitenansicht und einen Querschnitt eines Hauptrahmens.
Figur 7 zeigt einen Querschnitt und eine Seitenansicht einer L-förmigen Verbindung.
Figur 8 zeigt eine Seitenansicht und einen Querschnitt eines Lagerblocks.
Figur 9 zeigt eine Seitenansicht und eine Draufsicht eines Rahmens, der einen Lagerblock und eine Felge miteinander verbindet.
Figur 10 zeigt eine Seitenansicht und einen Querschnitt einer Gehäusewelle (eines Flansches) für ein Tellerrad.
Figur 11 zeigt eine Seitenansicht und einen Querschnitt einer Welle zur Befestigung eines Kegelrades.
Figur 12 zeigt eine schematische Darstellung einer Sicherheitskupplung.
Figur 13 zeigt eine schematische Darstellung eines Gummibandendstückes, das an einer Halterung befestigt werden kann.

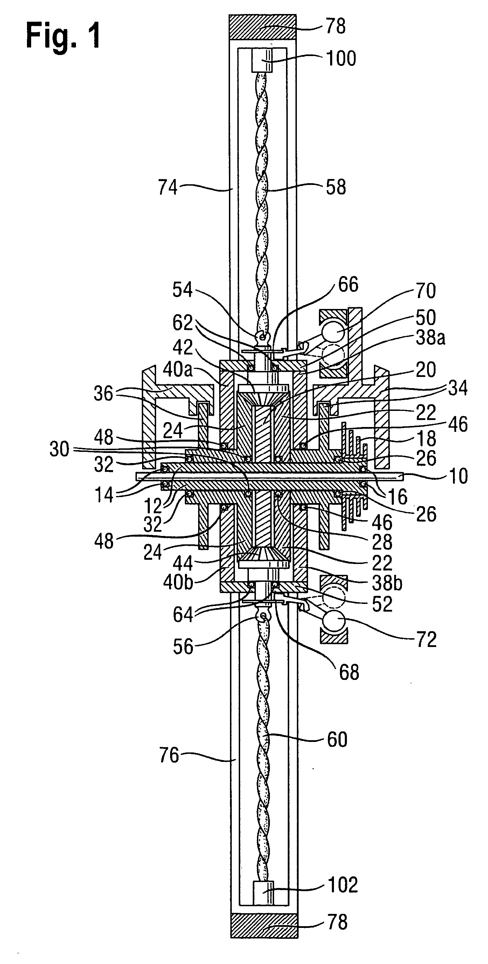

Figur 1 zeigt einen Querschnitt einer Vorrichtung zum Speichern und Abgeben von Bremsenergie eines Rades mit einer Achse 10, einer Hauptwelle 12, einem Zahnkranzsatz 18, einem Hauptrahmen 20, zwei Tellerrädern 22 und 24, vier Stabilisatoren 38 a, 38 b, 40 a und 40 b, zwei Kegelrädern 42 und 44, zwei Scheiben 66 und 68, zwei Befestigungsösen 54 und 56, zwei Gummibändern 58 und 60, wobei jedes der Gummibänder aus mehreren Gummibändern bestehen kann, zwei Lagerblöcken 50 und 52, zwei U-förmigen Rahmen 74 und 76, zwei Bremssystemen 34 und 36, zwei Speicherbremsen 70 und 72, zwei Sicherheitskupplungen 100 und 102, mehreren Kugellagern 14, 16, 26, 28, 30, 32, 46, 48, 62 und 64, und einer Felge 78.
Die Vorrichtung rotiert um eine Achse 10, die Rotationsachse des Rades. Auf die Achse 10 ist die Hauptwelle 12 geschoben, die über zwei Kugellager 14 und 16 frei um die Achse 10 rotieren kann. An einem Ende der Hauptwelle 12 befindet sich ein Zahnkranzsatz 18, mit dem das Rad unter Verwendung einer herkömmlichen Fahrradantriebsvorrichtung mit Fußpedalen und Kette (nicht gezeigt), angetrieben werden kann. Ein Hauptrahmen 20 ist auf die Hauptwelle 12 gesteckt und mit zwei L-förmigen Verbindungen (nicht gezeigt) etwa mittig auf der Hauptwelle 12 fixiert. Der Hauptrahmen 20 ist mit dem Zahnkranzsatz 18 und dieser mit einem Freilaufkugellager verbunden, sodass der Zahnkranzsatz 18 mechanisch oder magnetisch ein- oder ausgekuppelt werden kann.

Auf die Hauptwelle 12 sind zwei Tellerräder 22 und 24 geschoben. Ein Tellerrad 22 befindet sich zwischen dem Kettenradsatz 18 und dem Hauptrahmen 20. Ein anderes, zu dem vorhergehenden identisches Tellerrad 24 ist zu diesem spiegelsymmetrisch auf der anderen Seite des Hauptrahmens 20 angeordnet. Beide Tellerräder 22 und 24 sind über Kugellager 26, 28, 30 und 32 auf der Hauptwelle 12 frei drehbar gelagert. Ferner ist an jedem Tellerrad 22 und 24 jeweils ein Bremssystem 34 und 36, zum Beispiel eine mechanische oder hydraulische Bremse, die mit einem Fahrradrahmen starr verbunden ist, befestigt.

Auf dem kreuzförmigen Hauptrahmen 20 werden vier Lagerblöcke (von denen in dieser Darstellung nur zwei 50 und 52 zu sehen sind) befestigt. Auf jedem Lagerblock 50 und 52 wird ein U-förmiger Rahmen 74 und 76 befestigt, der an der Rückwand starr mit der Fahrradfelge 78 verbunden ist. Die Kegelräder 42 und 44, deren Zähne unter einem Winkel von zum Beispiel jeweils 45° mit den Zähnen der Tellerräder 22 und 24 kämmen, sind über Kugellager 62 und 64 frei drehbar in den Lagerblöcken 50 und 52 geführt. Die Kegelräder 42 und 44 rotieren innerhalb der Lagerblöcke um eine Achse, die auf der Rotationsachse 10 des Rades senkrecht steht. Ferner drehen sich die Kegelräder 42 und 44 mit den Lagerblöcken 50 und 52 um die Achse 10. In diesem Ausführungsbeispiel sind die Durchmesser der Tellerräder größer dargestellt, als die Durchmesser der Kegelräder. In Abhängigkeit von der gewünschten Übersetzung ist es auch möglich, dass die Durchmesser der Tellerräder kleiner sind, als die Durchmesser der Kegelräder. Ferner ist es möglich, dass die Tellerräder und die Kegelräder den gleichen Durchmesser besitzen.

Die Stabilisatoren 38 a, 38 b, 40 a und 40 b stabilisieren die Tellerräder 22 und 24 und die Kegelräder 42 und 44. Die Stabilisatoren 38 a, 38 b, 40 a und 40 b befinden sich auf den Tellerrädern 22 und 24 und sind über Kugellager 46 und 48 um die Rotationsachse 10 frei drehbar gelagert. Des Weiteren sind die Stabilisatoren 38 a, 38 b, 40 a und 40 b über die Lagerblöcke 50 und 52 starr mit dem Hauptrahmen 20 verbunden.

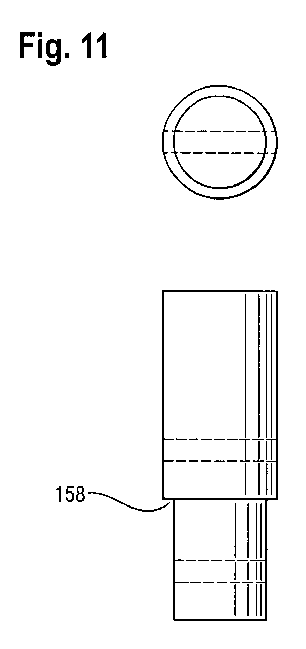

In den Kegelrädern 42 und 44 befindet sich jeweils eine Welle (Figur 11), die auf der einen Seite mit dem Kegelrad verbunden ist. Auf der anderen, der Fahrradfelge 78 zugewandten Seite der Welle, befinden sich ösenförmige Vorrichtungen 54 und 56, an denen Gummibänder 58 und 60 befestigt sind. Die anderen Enden der Gummibänder 58 und 60 sind innerhalb der U-förmigen Rahmen 74 und 76 an deren radial aussen liegenden Wänden, die mit der Felge 78 verbunden sind, über eine mechanisch oder magnetisch steuerbare Sicherheitskupplung 100, 102, befestigt. Dabei können die Gummibänder 58 und 60 ein oder mehrmals durch die Ösen 54 und 56 gesteckt werden, bevor sie befestigt werden. Zwischen den Ösen 54 und 56 und den Kegelrädern 42 und 44 befindet sich jeweils eine Scheibe 66 und 68 und an jeder der Scheiben jeweils eine zugehörige Bremsvorrichtung 70 und 72.

Die Speicherbremsen 70 und 72 dienen der Speicherung oder Freisetzung von Energie, die in den Gummibändern 58 und 60 gespeichert wird oder aus diesen freigesetzt werden soll. Dies geschieht (am Beispiel der Speicherbremse 70), indem die Scheibe 66 festgehalten wird, die sich zwischen dem Kegelrad 42 und einer ösenförmigen Vorrichtung 54, an der die Gummibänder 58 befestigt sind, befindet. Dabei wird die Speicherbremse 70, die entweder als magnetische Vorrichtung oder mechanisch ausgeführt sein kann, aktiviert oder deaktiviert. Damit wird die Rotation des Kegelrades 42 beeinflusst, sodass sich das Gummiband 58 nicht weiter aufwickeln kann, und somit die bis dahin aufgeladene Energie gespeichert werden kann. Das Lösen der Speicherbremse 70 und somit das Loslassen der Scheibe 66 bewirkt, dass eine zuvor in den Gummibändern gespeicherte Energie freigesetzt wird, indem das Kegelrad 42 zur Rotation bewegt wird. Die Aktivierung der Speicherbremse 70 kann eine weitere Rotation des Kegelrades 42 stoppen, sodass sich das Gummiband nicht weiter abwickeln kann, und somit die in diesem noch vorhandene Energie gespeichert bleibt.

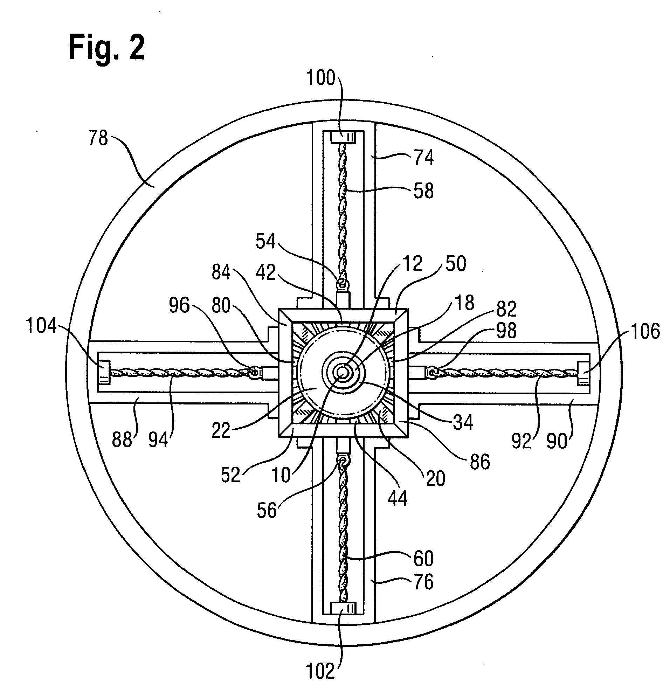

Figur 2 zeigt eine Seitenansicht der Vorrichtung zum Speichern und Abgeben von Bremsenergie eines Rades. Das Rad mit der Felge 78 rotiert um die Achse 10. Auf der Achse ist die Hauptwelle 12 über Kugellager (Figur 1) frei drehbar gelagert. Auf der Hauptwelle 12 befindet sich der mit dieser starr verbundene Zahnkranzsatz 18. Axial innenseitig des Zahnkranzsatzes 18 liegt die frei drehbare Bremsscheibe des Bremssystems 34 und hinter dieser, ebenfalls auf der Hauptwelle 12 frei drehbar gelagert, das Tellerrad 22. Die Zähne des Tellerrades 22 kämmen jeweils unter einem 45° Winkel mit den Zähnen der Kegelräder 42, 44, 80 und 82. Jedes der Kegelräder 42, 44, 80 und 82 rotiert um eine Achse, die auf der Rotationsachse 10 senkrecht steht. In den Öffnungen der Lagerblöcke 50, 52, 84 und 86 sind die Kegelräder 42, 44, 80 und 82 über Kugellager (Figur 1) frei drehbar gelagert. Die Lagerblöcke 50, 52, 84 und 86 sind über den kreuzförmigen Hauptrahmen 20 starr mit der Hauptwelle 12 verbunden. Die Felge 78 und die Lagerblöcke 50, 52, 84 und 86 sind über die U-förmigen Rahmen 74, 76, 88 und 90 starr miteinander verbunden.

Innerhalb der Rahmen 74, 76, 88 und 90 befinden sich jeweils die Gummibänder 58, 60, 92 und 94. Jeweils ein Ende der Gummibänder 58, 60, 92 und 94 ist mit einer der ösenförmigen Vorrichtungen 54, 56, 96 und 98 verbunden. Das andere Ende der Gummibänder 58, 60, 92 und 94 ist mit einer mechanisch oder magnetisch steuerbaren Sicherheitskupplung 100, 102, 104 und 106 verbunden. Die Sicherheitskupplungen 100, 102, 104 und 106 dienen dazu, ein Überspannen der Gummibänder 58, 60, 92 und 94 zu verhindern.

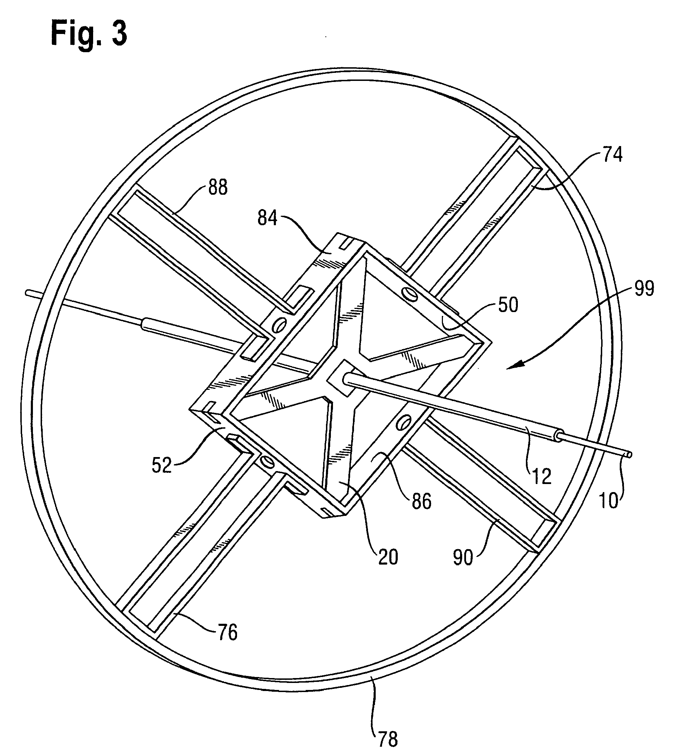

Figur 3 zeigt eine 3-dimensionale Ansicht einer Rahmenkonstruktion der Vorrichtung zum Speichern und Abgeben von Bremsenergie. Auf der um die Rotationsachse 10 über Kugellager (Figur 1) frei umlaufenden Hauptwelle 12 ist der kreuzförmige Hauptrahmen 20 mit Hilfe von Verbindungen (nicht gezeigt) fixiert. An jedem Ende des kreuzförmigen Hauptrahmens 20 stoßen jeweils Enden von zwei Lagerblöcken 50-86, 86-52, 52-84 und 84-50 zusammen. Die Enden der rechteckförmigen Lagerblöcke 50, 52, 84 und 86 werden mit zum Beispiel Schrauben miteinander verbunden. Jeder Lagerblock 50, 52, 84 und 86 besitzt an einem seiner Enden eine Öffnung. Diese Öffnungen bilden in den Kanten von jeweils zwei zusammentreffenden Lagerblöcken eine gemeinsame Öffnung, in die genau ein Ende des Hauptrahmens 20 passend hineingesteckt werden kann.

Auf der zur Fahrradfelge 78 gerichteten Seite eines jeden Lagerblocks 50, 52, 84 und 86 ist jeweils einer der U-förmigen Rahmen 74, 76, 88 und 90 befestigt. Dabei werden die Rahmen 74, 76, 88 und 90 mit der Öffnung zu jeweils einem Lagerblock ausgerichtet. Die radial außenseitigen Enden der U-förmigen Rahmenstücke 74, 76, 88 und 90 sind jeweils starr mit der Felge 78 des Rades verbunden. Die starre Rahmenkonstruktion 99 besteht aus der Hauptwelle 12, dem Hauptrahmen 20, den Lagerblöcken 50, 52, 84 und 86 und den U-förmigen Rahmen 74, 76, 88 und 90. Wie hier beschrieben, ist die Rahmenkonstruktion 99 aus mehreren Einzelteilen aufgebaut. Es ist auch möglich, dass die Rahmenkonstruktion 99 aus weniger Teilen aufgebaut ist oder sogar aus einem integralen Rahmenstück besteht.

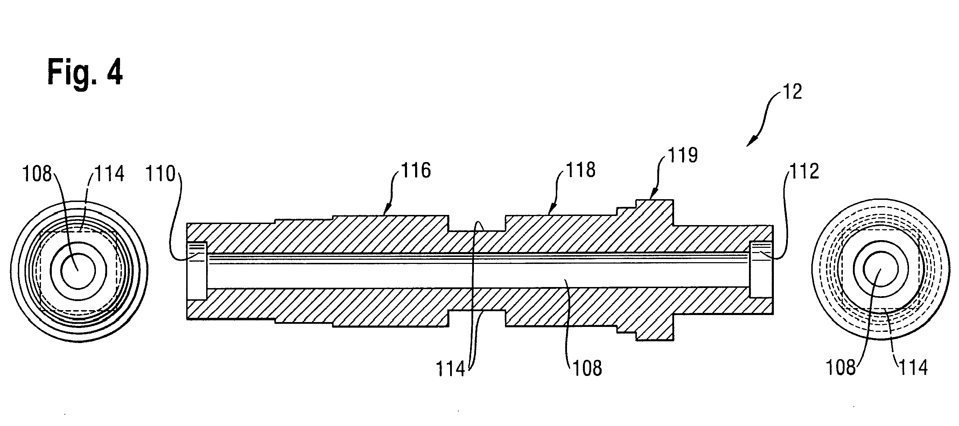

Figur 4 zeigt in einem Längsschnitt und zwei Seitenansichten ein mögliches Ausführungsbeispiel einer Hauptwelle. Die Hauptwelle 12 hat die Form eines Hohlzylinders mit nahezu kreisrunder Schnittfläche. Im Längsschnitt der Hauptwelle 12 ist ein kreiszylinderförmiger Hohlraum 108 an den beiden Enden 110 und 112 der Hauptwelle 12 zu einer vergrößerten Zylinderöffnung erweitert. Der innere Zylinderhohlraum 108 nimmt die Achse 10 (siehe Figur 1) auf. Um die Achse 10 ist die Hauptwelle mittels Kugellagern 14 und 16 (siehe Figur 1), die in den erweiterten Zylinderöffnungen 110 und 112 angeordnet sind, drehbar gelagert. Die äußere Zylinderform besitzt in etwa mittig eine rechteckige Ausnehmung 114, die für die Positionierung des Rahmens 20 (siehe Figur 1) vorgesehen ist. Ferner sind auf der Hauptwelle 12 in dafür vorgesehenen Bereichen 116 und 118 die Tellerräder 22 und 24 über Kugellager 26, 28, 30 und 32 (siehe Figur 1) frei drehbar gelagert und im Bereich 119 ist der Zahnkranzsatz 18 befestigt.

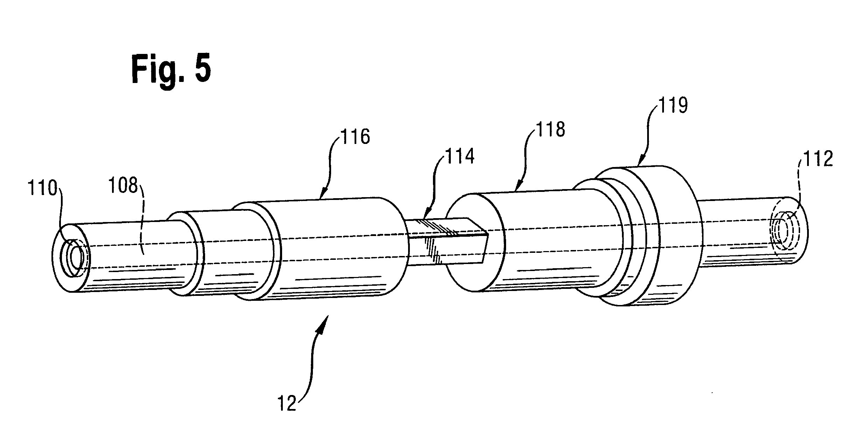

Figur 5 zeigt eine 3-dimensionale Ansicht der Hauptwelle 12 gemäß Figur 4. Der kreiszylinderförmige Hohlraum 108, der die Achse 10 (siehe Figur 1) aufnimmt, ist durch die unterbrochenen Linien angedeutet. In den erweiterten Zylinderöffnungen 110 und 112 sind Kugellager 14 und 16 (Figur 1) platziert, die dazu dienen, dass die Hauptwelle 12 um die Achse 10 (siehe Figur 1) drehbar ist.

In etwa der Mitte der Hauptwelle 12 ist auf der Außenseite die rechteckige Ausnehmung 114 ausgeformt, auf der der Hauptrahmen 20 (siehe Figur 1) fixiert ist. An den mit den Pfeilen angedeuteten Positionen 116 und 118 werden die Tellerräder 22 und 24 (siehe Figur 1) über Kugellager 26, 28, 30 und 32 frei drehbar' gelagert und an der Position 119 wird der Zahnkranzsatz 18 befestigt.

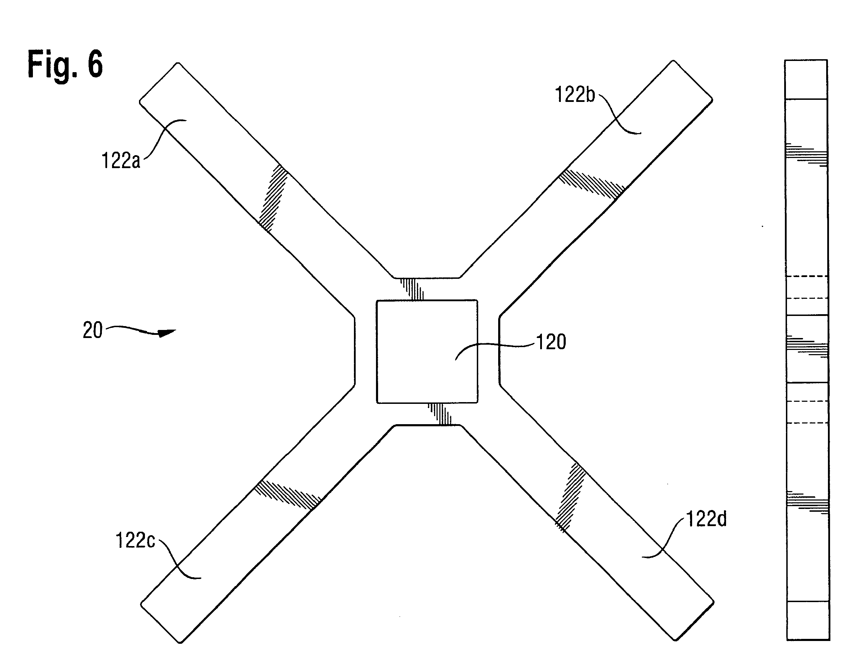

Figur 6 zeigt einen Querschnitt und eine Seitenansicht des Hauptrahmens 20. Der Hauptrahmen 20 besitzt eine kreuzförmige Struktur und im Zentrum eine rechteckige Öffnung 120, deren Ecken jeweils in Richtung eines der kreuzförmigen Enden 122a, b, c und d deuten. Die rechteckige Öffnung 120 ist in der rechteckigen Ausnehmung 114 der Hauptwelle 12 (siehe Figuren 4 und 5) positioniert und der Hauptrahmen ist mit L-förmigen Verbindungen, die zwischen die Hauptwelle 12 (siehe Figur 1) und den Hauptrahmen 20 gesteckt werden, fixiert. Jedes Rahmenbein 122 a, 122 b, 122 c und 122 d wird jeweils bündig in eine Öffnung hineingesteckt, die aus zwei aufeinandertreffenden Lagerblöcken 50, 52, 84 und 86 gebildet wird.

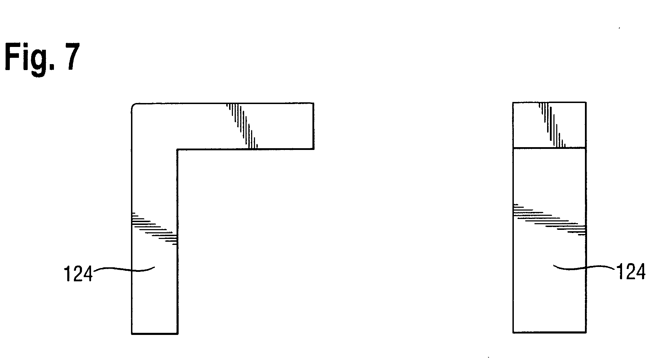

Figur 7 zeigt einen Querschnitt und eine Seitenansicht einer L-förmigen Verbindung 124, mit der der Hauptrahmen 20 (siehe Figuren 1 und 6) an der Hauptwelle 12 (siehe Figuren 1 und 5) fixiert wird. Dabei füllen die L-förmigen Verbindungen 124 den Zwischenraum zwischen der rechteckigen Ausnehmung 114 der Hauptwelle 12 (siehe Figuren 4 und 5) und dem Hauptrahmen 20 (siehe Figuren 1 und 6), um eine Fixierung des Hauptrahmens 20 auf der Hauptwelle 12 zu gewährleisten.

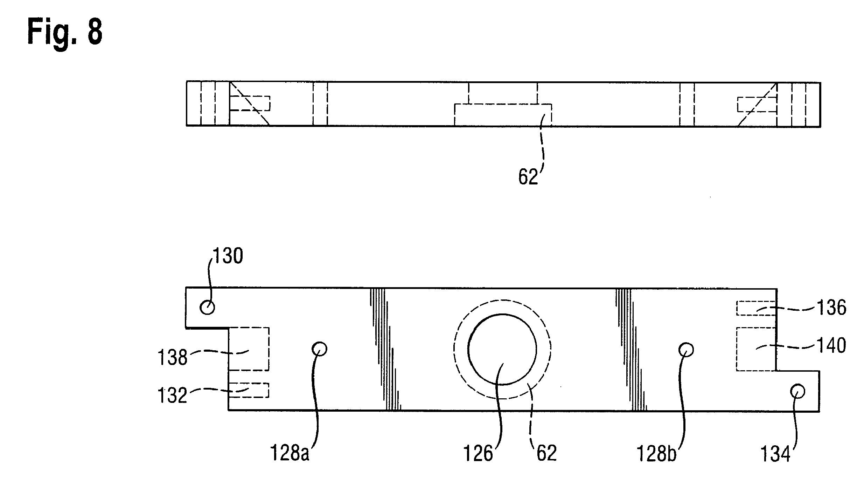

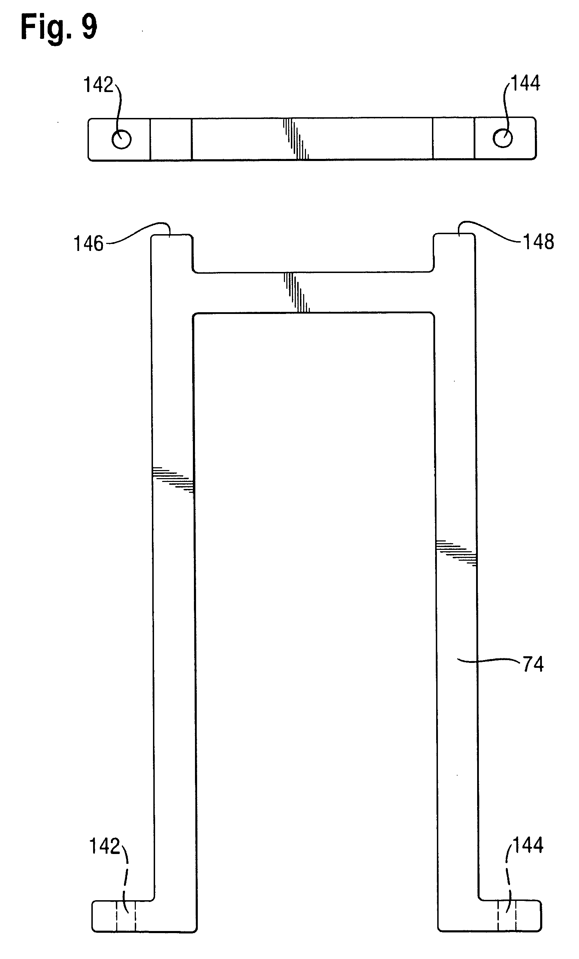

Figur 8 zeigt eine Seitenansicht und einen Querschnitt eines der Lagerblöcke 50, 52, 84 und 86 (siehe Figuren 1, 2 und 3). Vier Lagerblöcke werden derart miteinander verbunden, dass sie einen rechteckigen Rahmen bilden, wie in Figuren 2 und 3 dargestellt. Dabei werden die Öffnung 130 eines Lagerblocks und zum Beispiel die zur Öffnung 136 äquivalente Öffnung eines anderen Lagerblocks übereinandergelegt und beide Lagerblöcke mit zum Beispiel einer Schraube oder einem Stift, der durch die Öffnungen gesteckt wird, verbunden. In gleicher Weise wird mit der Öffnung 132 und einer zur Öffnung 134 äquivalenten Öffnung eines anderen Lagerblocks verfahren. Der so aus vier Lagerblöcken gebildete Rahmen besitzt in jeder seiner Ecken Öffnungen 138 und 140. In diesen Öffnungen, die in Richtung der Achse 10 (siehe Figur 1) ausgerichtet sind, wird jeweils eines der vier Beine 122 a, 122 b, 122 c und 122 d (siehe Figur 6) des Hauptrahmens 20 (siehe Figuren 1, 2, 3 und 6) platziert, sodass die Lagerblöcke 50, 52, 84 und 86 mit dem Hauptrahmen 20 starr verbunden sind. Auf der zur Felge gerichteten Seite der Lagerblöcke 50, 52, 84 und 86 wird jeweils ein Lagerblock mit jeweils einem U-förmigen Rahmen 74, 76, 88 und 90 (siehe Figuren 1, 2 und 3) verbunden. Dies geschieht mit Hilfe der dafür vorgesehenen Öffnungen 128 a und 128 b (dies wird in Figur 9 näher gezeigt). Jeder Lagerblock 50, 52, 84 und 86 besitzt ferner in etwa mittig eine kreisförmige Öffnung 126, die ein Kegelrad 42, 44, 80 und 82 aufnimmt. Um zu gewährleisten, dass jedes Kegelrad 42, 44, 80 und 82 in den Lagerblöcken drehbar gelagert ist, wird die Öffnung 126 eines jeden Lagerblocks auf der zur Achse gerichteten Seite erweitert (unterbrochene Linie), um an dieser Stelle jeweils ein Kugellager 62 oder 64 (siehe Figur 1) unterzubringen.

Figur 9 zeigt eine Seitenansicht und einen Querschnitt eines U-förmigen Rahmens 74, 76, 88 und 90, der einen Lagerblock 50, 52, 84 und 86 (siehe Figuren 1, 2 und 3) und eine Felge 78 (siehe Figur 2) miteinander verbindet. Jeweils ein U-förmiges Rahmenstück wird mit seiner Öffnung zu jeweils einem Lagerblock hin ausgerichtet und über die beiden Enden jeweils eines Rahmenstücks, die nach außen gebogen bzw. geformt sind, über Öffnungen 142 und 144, die sich in den abgebogenen Enden befinden, starr verbunden. Dabei werden zum Beispiel die Öffnung 142 eines Rahmens und die Öffnung 128 a eines Lagerblocks (siehe Figur 8) und die Öffnung 144 eines Rahmens und die Öffnung 128 b eines Lagerblock übereinandergelegt und mit einer Schraube oder einem Stift (nicht gezeigt) miteinander verbunden. Der Rücken des U-förmigen Rahmens wird über die Verlängerungen 146 und 148 mit der Felge 78 (Figur 2) starr verbunden. Es ist auch möglich, dass der Rücken des U-förmigen Rahmens über ein zusätzliches Verbindungsstück (nicht gezeigt) mit der Felge 78 verbunden wird.

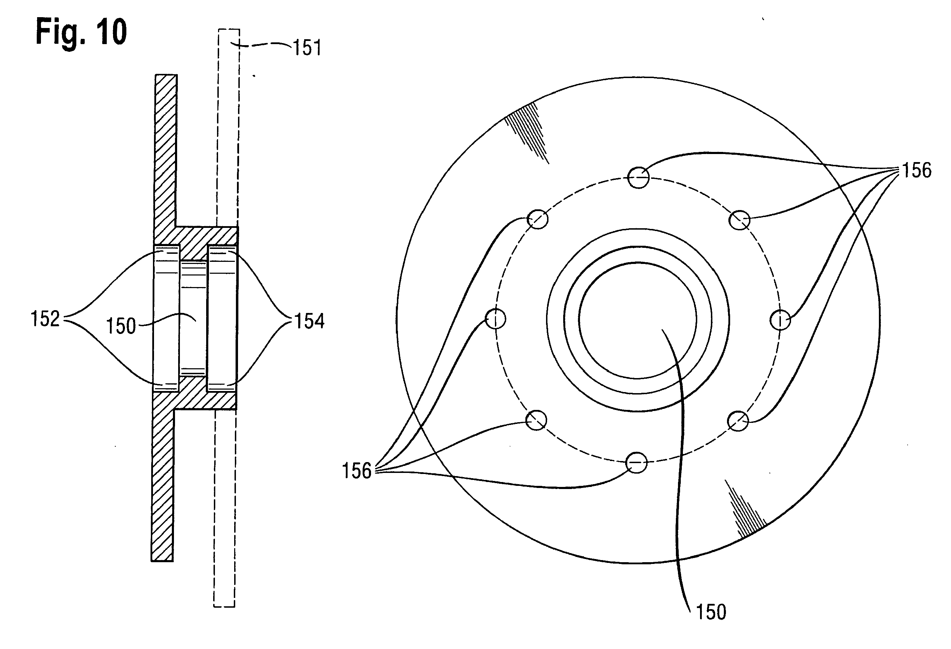

Figur 10 zeigt eine Seitenansicht und einen Querschnitt einer Gehäusewelle (eines Flansches) für ein Tellerrad 22 und 24. Die Gehäusewelle besitzt in ihrem Zentrum eine kreisrunde Öffnung 150, die die Hauptwelle 12 (siehe Figur 1) aufnimmt, auf welcher die Gehäusewelle drehbar gelagert ist. Die drehbare Lagerung erfolgt über Kugellager 26, 28 oder 30 und 32 (siehe Figur 1), die sich in den Aussparungen 152 und 154 der Gehäusewelle befinden. Die Öffnungen 156, die kreisförmig (unterbrochene Linie) auf der Gehäusewelle angeordnet sind, dienen der Befestigung eines Tellerrades. Gemäß einer bevorzugten Ausgestaltung kann sich auf der Gehäusewelle eine Vorrichtung 151 (unterbrochene Linie im Querschnitt der Gehäusewelle) befinden, die für eine Bremsvorrichtung vorgesehen ist.

Figur 11 zeigt eine Seitenansicht und einen Querschnitt einer Welle eines Kegelrades 42, 44. Die Welle besitzt die Form eines abgestuften Kreiszylinders, mit zwei unterschiedlichen Kreisdurchmessern. Die Seite der Welle mit dem kleineren Kreisdurchmesser wird in einen der Lagerblöcke 50, 52, 84 und 86 (siehe Figur 1, 2) gesteckt. In dem Übergangsbereich 158 zwischen dem größeren und dem kleineren Kreisdurchmesser wird ein Kugellager 62 oder 64 (siehe Figur 1) angeordnet, damit die Welle in einem Lagerblock frei drehbar gelagert ist. Auf der zur Achse 10 (siehe Figur 1) gerichteten Seite der Welle (Zylinderseite mit dem kleineren Kreisdurchmesser) wird das Kegelrad starr befestigt. Auf der anderen Zylinderseite, die zur Felge 78 (siehe Figur 2) gerichtet ist, wird das Gummiband 58, 60, 92 und 94 (siehe Figur 1) befestigt.

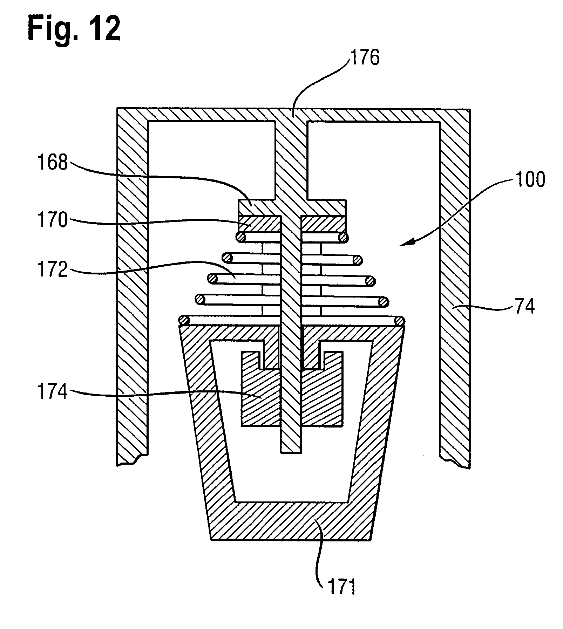

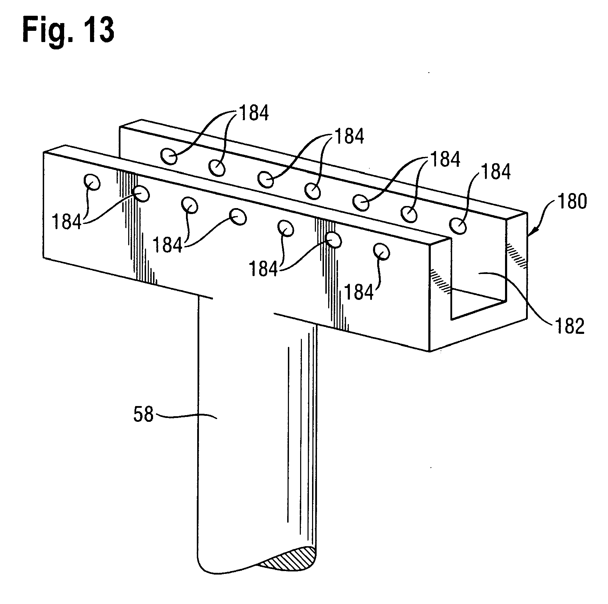

Figur 12 zeigt eine schematische Darstellung einer Sicherheitskupplung 100, 102, 104 und 106. Die Sicherheitskupplung besteht aus einer äußeren Kupplungsplatte 168, einer inneren Kupplungsplatte 170, einer Feder oder magnetischen Vorrichtung 172, und einer Mutter 174. Die Sicherheitskupplungen 100, 102, 104 und 106 befinden sich jeweils auf der Innenseite der U-förmigen Rahmen 74, 76, 88 und 90 (Figur 2), und sind über die Verbindungsstelle 176 an diesen befestigt. An dem Beispiel der Sicherheitskupplung 100, ist ein Ende des Gummibandes 58 (Figur 2) mit der inneren Kupplungsplatte 170, zum Beispiel über eine Befestigung an einer Halterung 171 (wie in Figur 13 genauer beschrieben) verbunden. Die Spannung zwischen den Kupplungsplatten 168 und 170 ist durch eine Feder oder eine magnetische Vorrichtung 172 und eine Mutter 174 einstellbar. Das Gummiband 58 (Figuren 1 und 2) kann kontinuierlich solange angespannt werden, bis eine sicherheitsbedingte vorgegebene Spannungsgrenze erreicht wird. Bei Erreichen dieses Grenzwertes wird die Sicherheitsvorrichtung (Momentkupplung) 100 (Figur 2) aktiviert, die bewirkt, dass die Aufladevorrichtung für einen Moment ausgekuppelt wird, um sowohl ein Überspannen der Gummibänder, als auch eine spannungsbedingte Verformung des Rahmens durch Zugkräfte zu verhindern.
und keine weitere Aufladung mehr stattfinden kann.

Figur 13 zeigt ein Beispiel eines Gummibandendstückes zur Befestigung an einer Sicherheitskupplung 100, 102, 104 und 106 (Figur 12). Im Folgenden Ausführungsbeispiel besteht das Speicherelement 58 nicht aus mehreren Gummibändern, sondern aus einem Gummiband, dass an seinem länglichen Kopfende 180 eine Ausnehmung 182 besitzt, in die die Halterung 171 (Figur 12) bündig hineingesteckt werden kann. Nachdem die Halterung 171 (Figur 12) in die Ausnehmung 182 des Gummibandendstückes 180 hineingesteckt wurde, wird das Gummiband 58 an der Halterung 171 fixiert, indem zum Beispiel Stifte oder Schrauben in dafür vorgesehene Öffnungen 184 hineingesteckt werden und ein Herausrutschen der Halterung 171 aus dem Gummibandendstück 180 verhindert wird. Ein Vorteil der Verwendung eines einzelnen Gummibandes als Speicherelement gegenüber der Verwendung mehrerer Gummibänder liegt darin, dass durch Rotation des Bandes um die eigene Achse weniger Energie durch Reibung verloren geht.

Im Folgenden wird das Aufladen und Entladen von Bremsenergie in bzw. aus einer Speichervorrichtung eines Rades näher beschrieben. Dabei dreht sich das Rad zum Beispiel unter Verwendung des Kranzsatzes 18 (Figur 1) in Fahrtrichtung um die Achse 10. Die Bremsen 34 und 36 (Figur 1) können vom Fahrer einzeln oder beide gleichzeitig wahlweise betätigt werden.

Wird keine der Bremsvorrichtungen 34 und 36 betätigt, so dreht sich der Rahmen 99 (bestehend aus einer Hauptwelle 12, einem Hauptrahmen 20, den Lagerblöcken 50, 52, 84 und 86 und den U-förmigen Rahmen 74, 76, 88 und 90) um die Achse 10. Dabei werden die Kegelräder 42 und 44, die in den Lagerblöcken 50 und 52 gelagert sind, um die Achse 10 mitbewegt. Die Kegelräder 42 und 44 sind über ihre Zähne, die mit den Zähnen der Tellerräder 22 und 24 kämmen, mit diesen verbunden. Somit ruft eine Bewegung der Kegelräder 42 und 44 um die Achse 10 ebenfalls eine Bewegung der Tellerräder 22 und 24 um die Achse 10 hervor, so dass die Tellerräder passiv um die Achse 10 rotiert werden. Dies ist möglich, da die Tellerräder 22 und 24 über die Kugellager 26, 28, 30 und 32 auf der Hauptwelle 12 frei drehbar gelagert sind.

Wird zum Beispiel das rechte Tellerrad 22 über die Bremsvorrichtung 34, die mit dem Fahrradrahmen starr verbunden ist, festgehalten, so kann der Rahmen 99 dadurch um die Achse 10 rotieren, indem die Kegelräder 42 und 44, die in den Lagerblöcken 50 und 52 frei drehbar gelagert sind, an dieser Bewegung teilnehmen. Hierzu müssen die Kegelräder 42 und 44 um das Tellerrad 22 laufen, da die Zähne der Kegelräder 42 und 44 die Zähne des Tellerrades 22 kämmen. Dabei rotieren die Kegelräder 42 und 44 um ihre eigene Achse. Diese Rotation ruft eine passive Bewegung des Tellerrades 24 hervor; da die Zähne der Kegelräder 42 und 44 auch die Zähne des Tellerrades 24 kämmen und dieses somit mitbewegen.

Werden beide Tellerräder 22 und 24 über die rechtsseitige und die linksseitige Bremsvorrichtung 34 und 36 gleichzeitig festgehalten, so müssten auch hierzu, bei einer ungestörten Rotation des Rahmens 99 um die Achse 10, die Kegelräder 42 und 44 an dieser Bewegung teilnehmen. Dazu müssten die Kegelräder 42 und 44 die Tellerräder 22 und 24 mitbewegen oder um diese laufen. Die Kegelräder 42 und 44 können die Tellerräder 22 und 24 aber nicht mitbewegen, da beide Tellerräder über die Bremsvorrichtungen 34 und 36 starr mit dem Fahrradrahmen verbunden sind. Des Weiteren können die Kegelräder 42 und 44 nicht um beide Tellerräder 22 und 24 gleichzeitig laufen, da diese Bewegung aktiv durch eine Fixierung der Tellerräder 22 und 24 mit dem Fahrradrahmen blockiert wird. Da der Rahmen 99, der die Speichen eines Rahmens repräsentiert, über die gleichzeitige Betätigung des links- und rechtsseitigen Bremssystems 34 und 36 mit dem Fahrradrahmen ein starres System bildet, wird die Rotation des Rades durch die Blockierung der Kegelräder abgebremst. Somit bleibt, bei gleichzeitiger Betätigung der beiden Bremsen 34 und 36, das Rad stehen.

Eine Speichervorrichtung eines Rades kann mit Bremsenergie aufgeladen oder dieser kann gespeicherte Bremsenergie entzogen werden, wenn, wie im Folgenden beschrieben wird, wahlweise die rechtsseitige oder die linksseitige Bremse 34 oder 36 betätigt wird. Wird allein die rechtsseitige Bremse 34 (Figur 1) aktiviert, so drehen sich die Kegelräder 42 und 44 weiter um die Achse 10. Die Kegelräder 42 und 44 (Figur 1) rotieren dabei um das festgehaltene Tellerrad 22. Ein weiteres Tellerrad 24 (Figur 1) dreht sich dadurch unbehindert in die gleich Richtung wie der Rahmen (Figur 1). Die Gummibänder 58 und 60, die an den Kegelrädern 42 und 44 befestigt sind, drehen sich gleichzeitig um die eigene Achse, so dass sie aufgewickelt und immer stärker angespannt werden.

Befinden sich die Gummibänder 58 und 60 in einem angespannten Zustand, so gibt es die folgenden Möglichkeiten:
a) Die rechtsseitige Bremse 34 wird losgelassen und die Speicherbremsen 70 und 72 werden aktiviert. In diesem Fall wird die in den Gummibändern 58 und 60 aufgenommene Energie gespeichert. Zu einem beliebigen späteren Zeitpunkt kann diese Energie dann freigesetzt werden, indem die linksseitige Bremse 36 betätigt und die Speicherbremsen 70 oder 72 deaktiviert werden. Die Speicherbremsen 70 oder 72 können gleichzeitig oder unabhängig voneinander deaktiviert werden. Dabei können die Kegelräder mit einer gemeinsamen Speicherbremse verbunden werden oder jedes Kegelrad kann mit einer Speicherbremse, die von den anderen Speicherbremsen unabhängig ist oder mit diesen gekoppelt ist, verbunden werden.
b) Die rechtsseitige Bremse 34 wird losgelassen und die linksseitige Bremse 36 wird aktiviert, während die Speicherbremsen 70 und 72 nicht betätigt werden. In diesem Fall wird die in den Gummibändern 58 und 60 gespeicherte Energie zur Antriebsunterstützung in Fahrtrichtung freigesetzt.
c) Die rechtsseitige Bremse 34 wird weiterhin aktiviert, bis eine maximale Spannung in den Gummibändern 58 und 60 erreicht wird. In diesem Augenblick wird automatisch über die Sicherheitskupplungen 100 und 102 ausgekuppelt und es kann keine weitere Energie in die Gummibänder aufgenommen werden, bis die Sicherheitskupplung 100,102 wieder einsetzt (einkuppelt).

Im Einzelnen passiert zum Beispiel bei der Deaktivierung der Speicherbremse 70 durch die Betätigung der linksseitigen Bremse 36 (im Fall a) folgendes:

Das durch einen vorangegangenen Aufladevorgang (wie oben beschrieben) angespannte Gummiband 58 begibt sich beim Entladevorgang zurück in seinen lastfreien Zustand und versetzt dadurch das Kegelrad 42 in Rotation um seine Achse und dadurch in einen Lauf des Kegelrades 42 um das Tellerrad 24. Bei diesem Lauf des Kegelrades 42 um das Tellerrad 24 wird der Rahmen 99 (bestehend aus der Hauptwelle 12, dem Hauptrahmen 20, den Lagerblöcken 50, 52, 84 und 86 und den U-förmigen Rahmen 74, 76, 88 und 90) in eine Rotation um die Achse 10 beschleunigt da das Kegelrad in dem Rahmen über den Lagerblock 50 drehbar gelagert ist. Die Rotation des Rahmens resultiert in eine Vorwärtsbewegung des Rades in Fahrtrichtung. Die im Gummiband 58 gespeicherte Energie wird in Bewegungsenergie umgewandelt. Befindet sich das Gummiband in einem lastfreien Zustand, so gibt es die folgenden Möglichkeiten:
d) Die linksseitige Bremse 36 bleibt aktiviert und das Gummiband 58 beginnt sich aufzuwickeln. Diesmal in die andere Richtung. Der Mechanismus setzt spiegelverkehrt ein.
e) Die linksseitige Bremse 36 wird deaktiviert und die Speicherbremse 70 wird aktiviert. Hierdurch wird keine weitere Energie in das Gummiband aufgenommen oder von diesem abgegeben.
f) Die rechtsseitige Bremse 34 wird wie beschrieben zur Energiespeicherung eingesetzt. Der Lademechanismus beginnt von Neuem.

Die in der Vorrichtung gespeicherte Energie kann von unterschiedlichen Ausgangsgeschwindigkeiten aus zur Beschleunigung genutzt werden. Ist das Speichersystem (die Gummibänder) aufgeladen und ist die Speicherbremse 70 aktiviert, so kann das Fahrrad mit der Standardbremsvorrichtung angehalten werden, ohne dass Energie aus der Speichervorrichtung verloren geht. Es wäre auch möglich, das Fahrrad mit Hilfe der in der Speichervorrichtung gespeicherten Energie abzubremsen wenn die Kegelräder bei dem Entladevorgang der Gummibänder entgegen der Fahrtrichtung um das festgehaltene Tellerrad laufen.

## Patentansprüche

1. Vorrichtung zum Speichern und Abgeben von Bremsenergie eines Rades **dadurch gekennzeichnet, dass**
- Speicherelemente (58, 60, 92, 94) radial zwischen einer Radachse (10) und einer Radfelge (78) angeordnet sind,
- wobei eine Seite der Speicherelemente (58, 60, 92, 94) mit der Felge (78) und die andere mit jeweils einem, in einer starren Rahmenkonstruktion (99) frei drehbar gelagerten Kegelrad (42, 44, 80, 82) verbunden ist, das innerhalb des Rahmens (99) um seine Achse, die senkrecht auf der Rotationsachse (10) steht, rotiert und sich mit dem Rahmen (99) um die Achse (10) des Rahmens dreht,
- wobei die gezahnten Seiten der Kegelräder (42, 44, 80, 82), mit Zähnen von um die Radachse (10) frei drehbar gelagerten Tellerrädern (22, 24) kämmen.

2. Vorrichtung nach Anspruch 1, **dadurch gekennzeichnet, dass** Energie in mehrfach um eine Achse laufenden Speicherelementen (58, 60, 92, 94) aufgenommen und gespeicherte Energie von diesen abgebbar ist.

3. Vorrichtung nach einem der Ansprüche 1 oder 2, **dadurch gekennzeichnet, dass** die Speicherelemente (58, 60, 92, 94) aus einem oder mehreren, zum Beispiel Gummibändern, oder einem oder mehreren Federsystemen, zum Beispiel Spiralfedern, bestehen.

4. Vorrichtung nach Anspruch 1, **dadurch gekennzeichnet, dass** jedes Tellerrad (22, 24) jeweils mit einem Bremssystem (34, 36) abbremsbar ist, das mit einem Fahrradrahmen starr verbunden ist.

5. Vorrichtung nach einem der vorstehenden Ansprüche, **dadurch gekennzeichnet, dass** jedes Kegelrad (42, 44) mit einer Speicherbremse (70, 72) verbunden ist, mit der, in einem mit einem Kegelrad (42, 44) verbundenen Speicherelement (58, 60) gespeicherte Energie konserviert oder abgegeben werden kann.

6. Vorrichtung nach den Ansprüchen 4 und 5, **dadurch gekennzeichnet, dass** die Bremssysteme (34, 36 und 70, 72) einzeln oder gleichzeitig wahlweise betätigt werden können.

7. Vorrichtung nach einem der vorstehenden Ansprüche, **dadurch gekennzeichnet, dass** Energie über ein oder mehrere Bremssysteme mit zum Beispiel mechanischer oder magnetische Kupplungsvorrichtung mit Seitenbremsen (34, 36) und Speicherbremsen (70, 72) gespeichert oder abgegeben werden kann.

8. Vorrichtung nach einem der vorstehenden Ansprüche, **dadurch gekennzeichnet, dass** bei keiner Betätigung einer der Bremsvorrichtungen (34, 36), die Speicherelemente (58, 60, 92, 94) ohne Energiespeicherung oder Energieabgabe um die Achse (10) bewegt werden.

9. Vorrichtung nach einem der vorstehenden Ansprüche, **dadurch gekennzeichnet, dass** bei einer Betätigung einer der beiden Bremsvorrichtungen (34, 36) die Kegelräder (42, 44) um ihre Achse rotieren und somit Energie in den Speichervorrichtungen (58, 60) aufnehmbar oder gespeicherte Energie von diesen abgebbar ist.

10. Vorrichtung nach einem der vorstehenden Ansprüche, **dadurch gekennzeichnet, dass** bei einer gleichzeitigen Betätigung der Bremsvorrichtungen (34, 36) das Rad gebremst werden kann.

11. Vorrichtung nach Anspruch 1, 2 und 3, **dadurch gekennzeichnet, dass** die Speicherelemente (58, 60, 92, 94) mit einem oder mehreren Sicherheitsvorrichtungen (100, 102, 104, 106), wie zum Beispiel einer einstellbaren Sicherheitskupplung (Momentkupplung), ausgestattet ist, um ein Überspannen der Speicherelemente (58, 60, 92, 94) zu verhindern.

12. Vorrichtung nach einem der Ansprüche 4 oder 5, **dadurch gekennzeichnet, dass** die Bremssysteme (34, 36, 70, 72) derart aufeinander abstimmbar sind, dass die Speichervorrichtung sequentiell Energie aufnehmen und abgeben kann.

13. Vorrichtung nach einem der vorstehenden Ansprüche, **dadurch gekennzeichnet, dass** zu jedem Zeitpunkt gespeicherte Energie freigebbar ist.

14. Vorrichtung nach einem der vorstehenden Ansprüche, **dadurch gekennzeichnet, dass** die gespeicherte Energie nutzbar ist, um das Rad in Fahrtrichtung zu beschleunigen oder um es entgegen der Fahrtrichtung abzubremsen.

15. Vorrichtung nach einem der vorstehenden Ansprüche, **dadurch gekennzeichnet, dass** die Energiespeicherung von jeder Ausgangsgeschwindigkeit aus und ferner die gespeicherte Energie von unterschiedlichen Ausgangsgeschwindigkeiten, auch aus dem Stand, zur Beschleunigung nutzbar ist.

16. Vorrichtung nach einem der vorstehenden Ansprüche, **dadurch gekennzeichnet, dass** der Rahmen (99) (bestehend aus der Hauptwelle 12, dem Hauptrahmen 20, den Lagerblöcken 50, 52, 84 und 86, den U-förmigen Rahmen 74, 76, 88 und 90), zum Beispiel aus Stahl, aus Aluminium, aus Teflon oder Kunststoff in Faserverbundbauweise besteht.

17. Vorrichtung nach einem der vorstehenden Ansprüche, **dadurch gekennzeichnet, dass** die Speicherelemente (58, 60, 92, 94) aus dehnbarem oder elastischem Material, wie zum Beispiel Gummi oder anderen natürlichen oder synthetischen Elastomeren oder federndem Material bestehen.
